# EUROPEAN PATENT SPECIFICATION

(11) **EP 1 785 637 B1**
(45) Date of publication and mention of the grant of the patent: **29.04.2009**
(21) Application number: 06124082.6
(22) Date of filing: 14.11.2006
(51) Int. Cl.: F16C 33/10, F16C 9/02

(54) **Friction-bearing assembly for a rotating shaft**
Gleitlagereinrichtung für eine rotierende Welle
Dispositif de palier d'arbre rotatif

(30) Priority: 14.11.2005 EP 05110700
(43) Date of publication of application: 16.05.2007
(73) Proprietor: BRP-Rotax GmbH & Co. KG, 4623 Gunskirchen (AT)
(72) Inventor: Hochmayr, Markus, 4613 Krenglbach (AT); Gruber, Stefan, 4623 Gunskirchen (AT)
(74) Representative: Solf, Alexander

(56) References cited:
- EP-B- 1 278 966
- US-A- 3 965 880
- US-A- 4 168 636
- US-A- 4 640 630
- US-A- 5 913 608
- US-B2- 6 634 791

## Description

### CROSS REFERENCES TO RELATED APPLICATIONS

The present Patent Application claims priority from European Patent Application No. 05110700.1, filed November 14, 2005.

### FIELD OF THE INVENTION

The present invention relates generally to friction bearings and in particular to friction bearings for crankshaft of internal combustion engines.

### BACKGROUND OF THE INVENTION

Friction bearings are typically designed as double plain bushings assemblies defining an inner circumferential sliding surface for the rotating shaft being supported. A clearance gap is provided between the sliding surface of the friction bearing and the shaft to allow ingress of lubricating oil between the rotating shaft and the sliding surface to reduce friction and to allow for heat expansion of the rotating shaft. Lubricating oil is supplied either axially from each side of the friction bearing or through lubricating passages in the housing of the friction bearing exiting through holes provided in the mid section of the motion bearing. For crankshaft bearings, the sliding surface of the friction bearing typically includes a groove which provides a circumferential channel in which oil can circulate and completely encircle the bearing and shaft. In operation, the ingress of lubricating oil into the clearance gap may be disturbed and limited to only a portion of the sliding surface of the friction bearing due to restricted oil flow at the oil entry points or between the groove and the sliding surface which may lead to heat build-up and increased friction loss.

EP 1 278 966 B1 describes a plain bearing fitted, in use, in an associated bearing housing. The bearing is relieved at its axial ends by the provision of circumferential recesses such that the lubricating oil flows outwardly towards the relieved portions to exit the bearing at both axial ends.

US 6,634,791 discloses a shaft bearing member including an inner circumferential face serving as a sliding surface, an oil groove formed in the inner circumferential face so as to circumferentially extend, and a recess formed in the inner circumferential face so as to extend from at least one of both widthwise sides of the oil groove toward axial end side of the inner circumferential face with respect to the shaft so that the recess is rendered shallower and shallower.

Thus, there is a need for a friction bearing assembly that alleviates some of the drawbacks of conventional friction bearings and improves the ingress of lubricating oil between a rotating shaft and the sliding surface of the friction bearing.

### STATEMENT OF THE INVENTION

One aspect of the present invention is to provide a friction-bearing assembly comprising a friction bearing and a shaft, the friction bearing having a width, a first end, a second end and an inside surface including a sliding surface, the shaft having an outer surface being supported on the sliding surface of the friction bearing so as to rotate about a shaft axis; the friction-bearing assembly including a first bearing gap defined between the sliding surface of the friction bearing and the outer surface of the shaft, and a second bearing gap defined between the inside surface of the friction bearing and the outer surface of the shaft, the second bearing gap being at least 10% wider relative to the first bearing gap, to a maximum of 1 mm; the second bearing gap positioned at one of the first and second end, adjacent the first bearing gap and located in-between a lubricating oil supply and the first bearing gap such that the first bearing gap is supplied with lubricating oil through the second bearing gap.

In a preferred aspect of the present invention the second bearing gap forms a gap of at least 0.2 mm and at most 1 mm between the sliding surface of the friction bearing and the outer surface of shaft.

In a further preferred aspect, the inside surface of the friction bearing at the second bearing gap is inclined at an angle of less than 30° relative to the shaft axis.

In an additional preferred aspect, the friction-bearing assembly further comprises a bearing bushing which includes the sliding surface.

In a further preferred aspect the lubricating oil is supplied axially relative to the shaft axis, to the first bearing gap through one of the ends of the friction bearing.

In another preferred aspect of the present invention, the shaft is a crankshaft having two end portions and the friction bearing is a crankshaft bearing in a power unit case of an internal combustion engine, the friction bearing positioned at a first end portion of the crankshaft, and the second bearing gap of the friction-bearing assembly located on the one end of the friction-bearing assembly that is proximate to the first end portion of the crankshaft.

In a further preferred aspect of the present invention, the sliding surface of the friction bearing is made of aluminum or alloy thereof.

Embodiments of the present invention each have at least one of the above-mentioned aspects, but not necessarily have all of them.

Additional and/or alternative features, aspects and advantages of the embodiments of the present invention will become apparent from the following description, the accompanying drawings and the appended claims.

### BRIEF DESCRIPTION OF THE DRAWINGS

For a better understanding of the present invention as well as other aspects and further features thereof, reference is made to the following description which is to be used in conjunction with the accompanying drawings, where:

FIG. 1 is a schematic cross-sectional view of a friction bearing assembly in accordance with a first embodiment of the invention;

FIG. 2 is a schematic cross-sectional view of a friction bearing assembly in accordance with a second embodiment of the invention;

FIG. 6 is a schematic cross-sectional view of an engine housing and crankshaft assembly;

FIG. 7 is an enlarged detailed view of section A-A of FIG. 6.

FIG.8 is a side elevational view of an internal combustion engine incorporating a friction bearing assembly in accordance with one embodiment of the invention;

FIG.9 is a side elevational view of a motorcycle having an internal combustion engine as shown in FIG.8; and,

FIG.10 a side elevational view of a All-Terrain Vehicle (ATV) having an internal combustion engine as shown in FIG.8.

### DESCRIPTION OF PREFERRED EMBODIMENT(S)

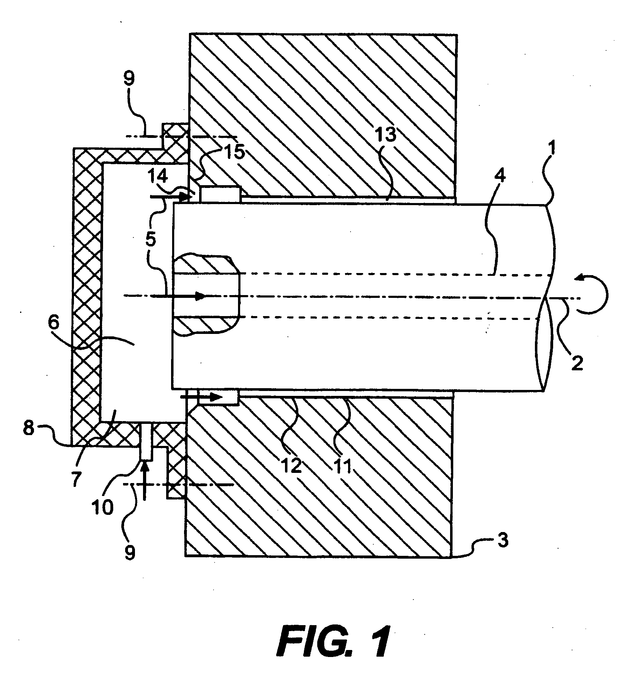

With reference to FIG. 1, a rotating shaft 1 is shown supported within a friction bearing 3 so as to rotate about a shaft axis 2. The friction bearing 3 includes inner circumferential surface 11 defining a sliding surface 12. The inner surface 11 defines a first bearing gap 13 between the sliding surface 12 and the rotating shaft 1 and a second bearing gap 14 at one end thereof which is wider than first bearing gap 13.

The shaft 1 includes a bore 4 through which lubricating oil 5 is routed into the shaft as illustrated by the large arrow 5. As shown schematically, an oil supply chamber 7 is provided at a first end 6 of the shaft 1. The oil supply chamber 7 is closed off and defined by an oil supply chamber cover 8 secured directly on the friction bearing 3 by means of screws/bolts 9. Lubricating oil is routed into the oil supply chamber 7 through an inlet 10 connected to an oil pump (not shown herein) by an appropriate line (also not shown herein). As illustrated by the small arrows 5, lubricating oil is delivered from the oil supply chamber 7 into the second bearing gap 14 leading to the first bearing gap 13 defined between the sliding surface 12 of the friction bearing 3 and the rotating shaft 1. The lubricating oil first moves from the oil supply chamber 7 into a second bearing gap 14 before passing from the second bearing gap 14 into the first bearing gap 13. The second bearing gap 14 is formed by a setback of the inner surface 11 of the friction bearing 1 *i*.*e*. a widening of the inside diameter of the friction bearing 3, so that the second bearing gap 14 forms a wider gap between the inner surface 11 of the friction bearing 3 and the shaft 1. The second bearing gap 14 provides a 10% to 50% greater space between the inner surface 11 of the friction bearing 3 and the shaft 1. The second bearing gap 14 has a minimum length of 1 mm relative to the rotating axis 2 of the shaft. The second bearing gap 14 provides a wider entrance for the lubricating oil to penetrate into the first bearing gap 13 and onto the sliding surface 12 thereby improving the flow of lubricating oil over the entire width of the friction bearing 3. The lubrication of the rotating shaft 1 is thereby greatly improved by the second bearing gap 14 and the reliability of the friction bearing 3 is correspondingly improved. Arranging a second, upstream, wider bearing gap 14 greatly improves the penetration of oil into the first bearing gap 13 and onto the sliding surface 12, particularly in the case of an axial feed or delivery of the oil into the first bearing gap 13 of the friction bearing 3 as illustrated in FIG.1. The transition of the inner surface 11 from the second bearing gap 14 to the first bearing gap 13 may be stepped, as shown in FIG. 1 however, it can also be in the form of a bevel or chamfer (not shown herein). As can be seen in Figure 1, the end of the friction bearing 3 facing the first end 6 of the rotating shaft 1 adjacent the second bearing chamber 14 includes a bevel (chamfer) 15 on the inside surface 11. Bevels of this kind are to be provided in accordance with the demands of manufacturing technology.

The second bearing gap 14 preferably extends for a length of at least 0.6 mm with respect to the shaft axis and most preferably at least 1 mm. The second bearing gap 14 has a clearance defined by the space between the inner surface of the friction bearing and the outer surface of the shaft. The clearance of the second bearing gap 14 is at least 10% bigger than the clearance of the first bearing gap 13, and is no greater than 1 mm excluding the bevel 15. In a preferred embodiment, the second bearing gap 14 is at least 0.2 mm but not greater than 1 mm. During trials, this embodiment was found to be especially effective for supplying the sliding surface of the friction bearing with lubricating oil. The clearance of the second bearing gap 14 is preferably at least 25% greater than the clearance of the first bearing gap 13, and most preferably at least 100% greater than the clearance of the first bearing gap 13, however no greater than 1 mm.

In a further embodiment the second bearing gap 14 has a clearance of between 0.4 mm and 0.8 mm. During trials, this embodiment was found to be especially effective for supplying the sliding surface of the friction bearing with lubricating oil. The second bearing gap 14 has a length of a least 3 mm and not more than half the width of the friction bearing with respect to the shaft axis. This embodiment is preferred when the sliding surface of the friction bearing 3 is supplied with lubricating oil axially as shown in FIG. 1. The inner surface of the friction bearing 3 at the second bearing gap 14 may be inclined at an angle of up to 30° relative to the shaft axis 2.

Preferably, the friction bearing 3 has a sliding surface 12 of aluminum or aluminum alloy. Positive friction-bearing running properties have be observed in the case of aluminum or an aluminum alloy.

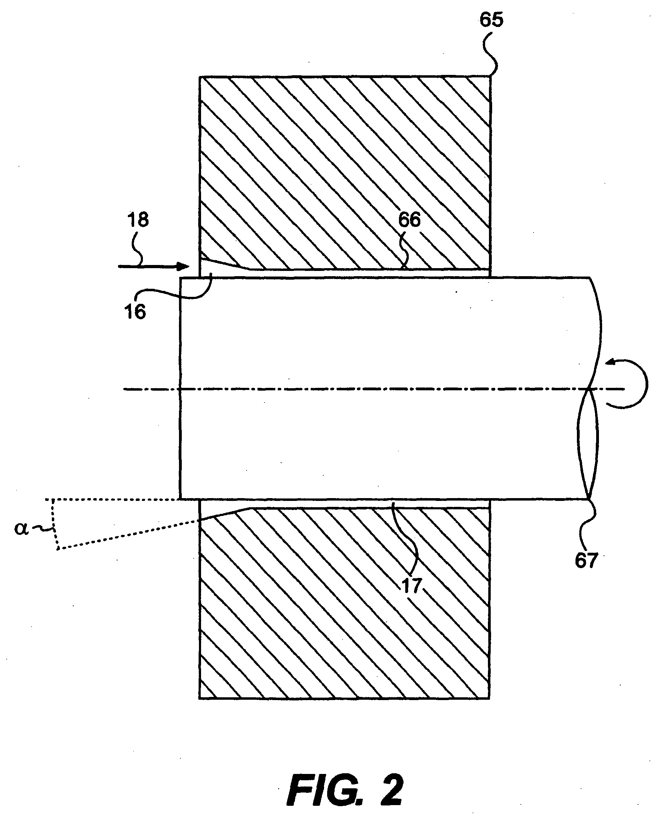

Figure 2 illustrates a second embodiment of the present invention. The friction bearing 65 includes a sliding surface 66 defining a first bearing gap 17 between the sliding surface 66 and the rotating shaft 67, and a second bearing gap 16 adjacent the first bearing gap 17. The second bearing gap 16 grows continuously wider from the first bearing gap 17 to the outer side of the friction bearing 65 and defines a bevel or chamfer having an angular inclination a, through which the lubricating oil may penetrate more easily into the first bearing gap 17 thereby improving the ingress of lubricant between the sliding surface 66 and the rotating shaft 67 where it is needed. The transition from the entrance of the second bearing gap 16 to the first bearing gap 17 is continuous. In one preferred embodiment of the present invention, the angular inclination a amounts to less than 45°, in particular less than 40°, or 35° and especially preferred to less than 30° relative to the axis of the rotating shaft 67. The lubricating oil 18 is delivered through an appropriate oil supply chamber, as described with reference to Figure 1.

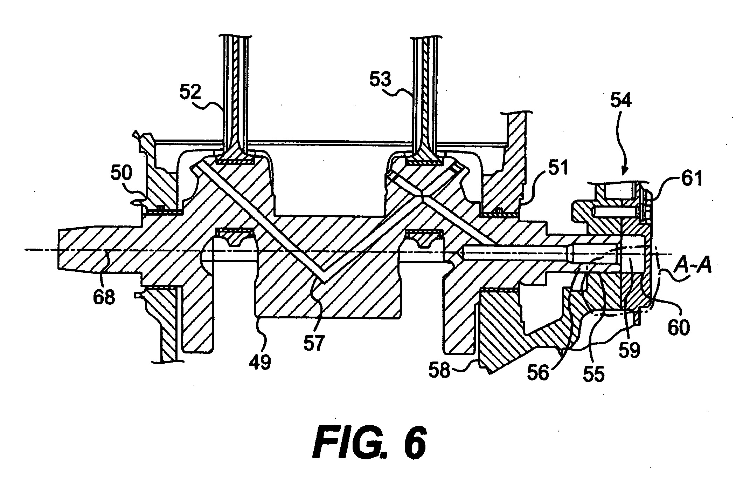

Figure 6 shows a crankshaft 49 having a crankshaft axis 68, supported for rotational movement by a first and second crankshaft main bearing 50, 51. Two pistons with corresponding connecting rods 52, 53 are secured to the crankshaft 49 so as to be able to rotate thereon. The crankshaft 49 is further supported by a supporting bearing 55 at a first end 54 of the crankshaft 49. Generally speaking, crankshaft supporting bearings are used to provide additional stabilization to the crankshaft and, in particular, to minimize the amount by which the crankshaft flexes. The crankshaft supporting bearing 55 is in the form of a friction-bearing assembly of the present invention. At the first end 54 of the crankshaft 49, the crankshaft includes a central bore 56 connected to oil channels 57 through which lubricating oil is fed and delivered to the various lubrication points. The lubricating oil is used, for example, to lubricate at least one of the crankshaft main bearings 50, 51 and/or at least one of the connecting rod bearings. As can be seen in Figure 6, the crankshaft supporting bearing 55 forms part of the crankcase 58. At the first end 54 of the crankshaft 49, there is an oil supply chamber 59 sealed off from the environment by an oil supply chamber cover 60. The oil supply chamber cover 60 is secured to the crankshaft supporting bearing 55 or to the crankcase 58 by suitable screws or bolts 61. In other embodiments, an oil supply chamber cover can be secured to the crankcase 58 or to a side cover, or be integrated into these. The oil supply chamber 59 has a supply line (not shown) to supply the oil supply chamber 59 with oil under pressure. This supply line routes the pressurized oil through a suitable opening in the oil supply chamber cover 60 or a through channel within the crankcase 58 to the oil supply chamber 59 (not shown herein). The crankcase 58 may further comprise an integral transmission housing accommodating at least one lay shaft and a transmission shaft.

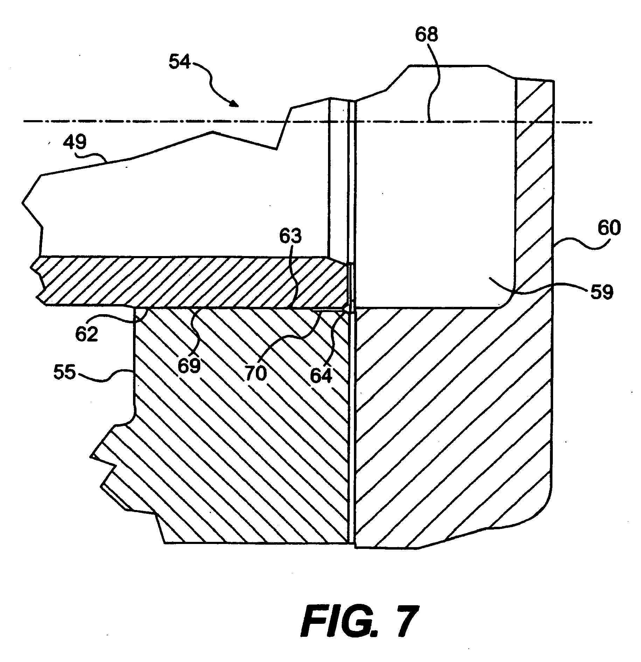

Figure 7 shows the details A-A of Figure 6. Specifically, Figure 7 shows the crankshaft supporting bearing 55, part of the first end 54 of the crankshaft 49, part of the oil supply chamber 59 as well as the oil supply chamber cover 60. As illustrated in Figure 7, a first bearing gap 62 is formed between the sliding surface 69 of the crankshaft supporting bearing 55 and the outer surface of the crankshaft 49. A second bearing gap 70, wider than the first bearing gap 62 is formed as a result of a widening in the inside diameter of the inner surface 63 of the supporting bearing 55. Adjacent the second bearing gap 70, a bevel 64 is provided which communicates with the oil supply chamber 59. Oil, in particular pressurized oil, is supplied from the oil supply chamber 59, through the second bearing gap 70 and into the first bearing gap 62. The second bearing gap 70 improves the penetration of lubricating oil into the first bearing gap 62 and onto the sliding surface 69 by providing a wider entry gap offering less resistance to the flow of lubricating oil. The embodiment of the friction bearing 55 illustrated in Figures 6 and 7 is shown as an integral part of the crankcase 58 however the friction bearing 55 could also include a pair of bearing bushings whose inner surfaces would incorporate a widening inside diameter defining a second bearing gap that improves ingress of lubricating oil into the first bearing gap.

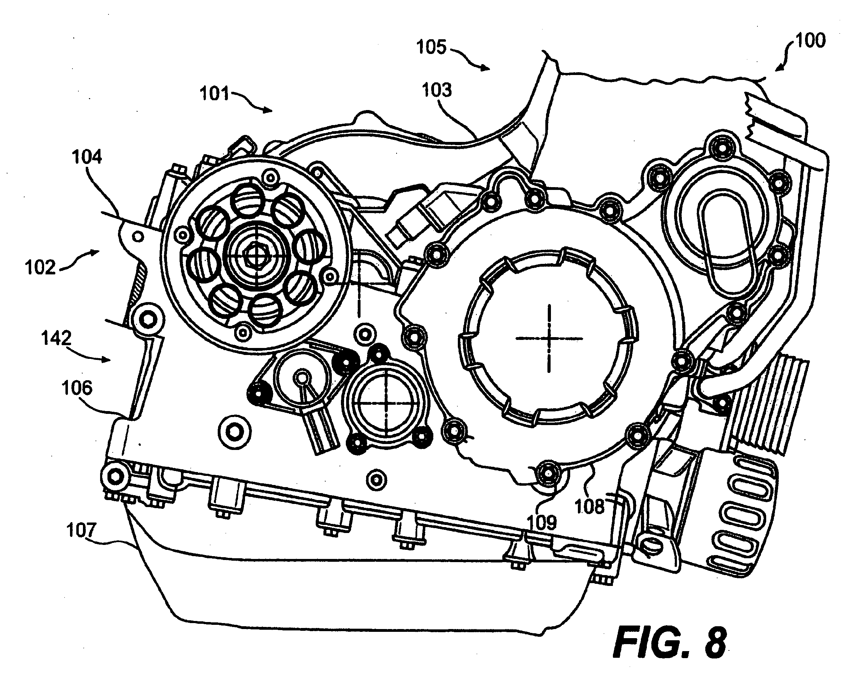

With reference to FIG.8, an internal combustion engine 100 has a power unit case 101. The power unit case 101 includes a crankcase 102 that is divided into a cylinder block portion 103, which includes the upper part of the crankcase 102 and a cylinder block 105, and a lower crankcase half 106 along a separating plane 104. An oil sump 107 is secured to the lower crankcase half 106. A cylinder head assembly (not shown) sits atop the cylinder block 105. The cylinder block 105 has two cylinders (not shown) inside each of which a piston reciprocates. Each of the pistons together with the side wall of its corresponding cylinder and the corresponding portion of the cylinder head assembly forms a combustion chamber (not shown). Since the internal combustion engine 100 of the present invention is preferably a four-cycle engine, at least one intake valve per cylinder (not shown) and at leas one exhaust valve per cylinder (not shown) are provided in the cylinder head assembly. Two intake valves and two exhaust valves per cylinder are preferably provided. A single overhead camshaft (not shown) disposed in the cylinder head assembly and operatively connected to the crankshaft 49, controls the actuation of the intake and exhaust valves. It is contemplated that two overhead camshafts (one for the intake valves and one for the exhaust valves) could be used. A fuel injector (not shown) and a spark plug (not shown) per cylinder are also provided in the cylinder head assembly. A pair of throttle bodies (one per cylinder) are used to regulate the quantity of air entering the combustion chambers. An air intake manifold (not shown) or an airbox (not shown) or both, are provided upstream of and in fluid communication with the throttle bodies. An exhaust manifold (not shown) in fluid communication with each combustion chamber is provided on the side of the cylinder block 105. The exhaust manifold is in fluid communication with the exhaust system of the vehicle incorporating the engine 100. It would be understood that the engine 100 also has other elements and systems not specifically shown and/or described in the present application. These can include, but are not limited to, a starter motor, an oil filter, a cooling system, an electrical system, and a fuel injection system.

The power unit case 101 also includes an integrated transmission housing 142 which can be made integrally with the crankcase 102 or fastened to the crankcase 102, with bolts for example. The side part of the power unit case 101 has a first housing cover 108 that is secured by at least one fastener 109, such as a screw, to the crankcase 102. When mounted, the first housing cover 108 forms part of the power unit case 101. In the present embodiment, the first housing cover 108 is an ignition cover which can be removed to provide access to an ignition chamber located in the space inside the power unit case 101 within which the ignition system or generator-ignition system is located. The ignition chamber can be part of the crankcase 102 or can be partially separated from the crankcase 102.

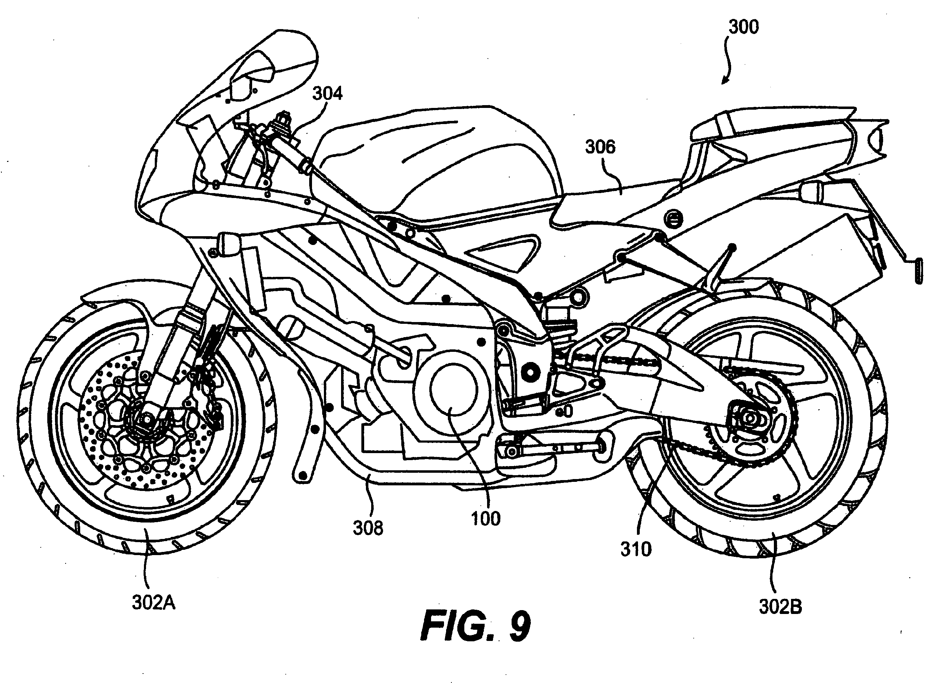

The internal combustion engine 100 can be used to power a motorcycle 300, as shown in fig. 9. The motorcycle 300 has two wheels 302a, 302b, a handlebar 304 to steer the front wheel 302a, and a straddle-type seat 306. The engine 100 is mounted to the frame 308 of the motorcycle 300 below the seat 306. The engine 100 powers the motorcycle 300 by having the output shaft of the transmission operatively connected to the rear wheel 302b via a chain 310. The friction-bearing assembly in accordance with the present invention improves the lubrication efficiency of the internal combustion engine 100 and therefore the durability of the motorcycle 300.

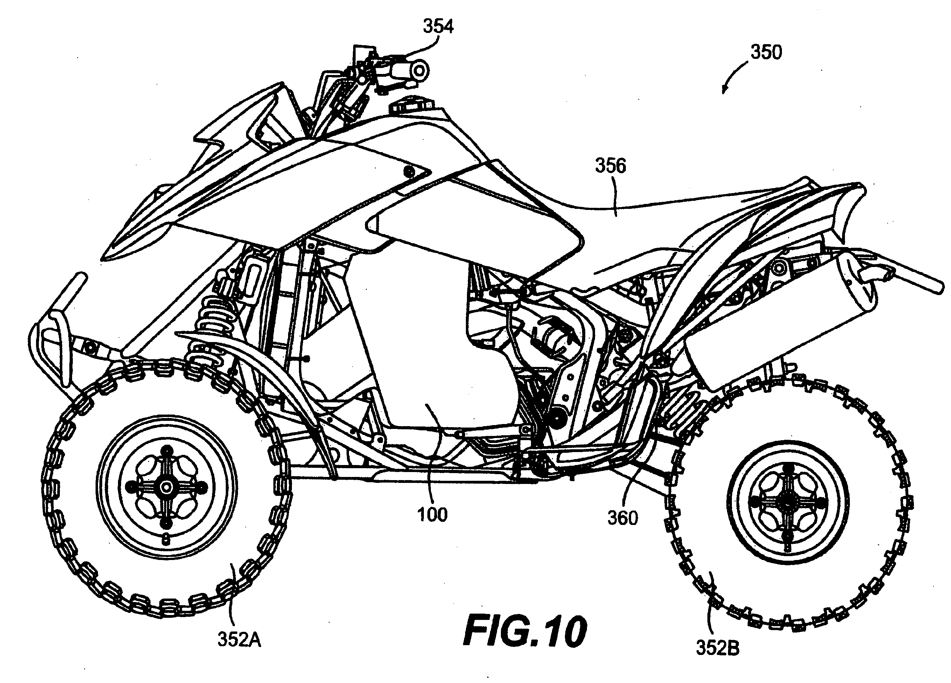

The internal combustion engine 100 can also be used to power an all-terrain vehicle (ATV) 350, as shown in fig. 10. The ATV 350 has two front wheels 352a, two rear wheels 352b, a handlebar 354 to steer the two front wheels 352a, and a straddle-type seat 356. The engine 100 is mounted to the frame 358 of the ATV 350 below the seat 356. The engine 100 powers the ATV 350 by having the output shaft of the transmission operatively connected to the two rear wheels 352b via a chain 360. The friction-bearing assembly in accordance with the present invention improves the lubrication efficiency of the internal combustion engine 100 and therefore the durability of the ATV 350.

The friction-bearing assembly according to the present invention is suitable for use in internal combustion engines including those used to power various motorized recreational vehicles, such as motor cycles, small off-road vehicles (ATV, quads), personal watercrafts (PWC), snowmobiles, sport boats, inboard and outboard engines, aircraft, karts, and small utility vehicles

Modifications and improvement to the above described embodiments of the present invention may become apparent to those skilled in the art. The foregoing description is intended to be exemplary rather than limiting. Furthermore, the dimensions of features of various components that may appear on the drawings are not meant to be limiting, and the size of the components therein can vary from the size that may be portrayed in the figures herein. The scope of the present invention is therefore intended to be limited solely by the scope of the appended claims.

## Claims

1. A friction-bearing assembly comprising a friction bearing (3, 65, 50, 51, 55) and a shaft (1, 67, 49),
the friction bearing (3, 65, 50, 51, 55) having a width, a first end, a second end and an inside surface including a sliding surface (12, 66, 69),
the shaft (1, 67, 49) having an outer surface being supported by the sliding surface (12, 66, 69) of the friction bearing (3, 65, 51, 55) so as to rotate about a shaft axis (2, 68);
the friction-bearing assembly including a first bearing gap (13, 17, 62) defined between the sliding surface of the friction bearing and the outer surface of the shaft, and a second bearing gap (14, 16, 70) defined between the inside surface of the friction bearing and the outer surface of the shaft, the second bearing gap (14, 16, 70) being at least 10 % wider relative to the first bearing gap (13, 17, 62), to a maximum of 1 mm;
the second bearing gap (14, 16, 70) positioned at one of the first and second end, adjacent the first bearing gap (13, 17, 62) and located in-between a lubricating oil supply and the first bearing gap (13, 17, 62) such that the first bearing gap (13, 17, 62) is supplied with lubricating oil via the second bearing gap (14, 16, 70).

2. A friction-bearing assembly as defined in Claim 1, wherein the second bearing gap (14, 16, 70) forms at gap of at least 0.2 mm and at most 1 mm between the sliding surface (12, 66, 69) of the friction bearing (3, 65, 50, 51, 55) and the outer surface of shaft (1, 67, 49).

3. A friction-bearing assembly as defined in Claim 2, wherein the second bearing gap (14, 16, 70) forms a gap of at least 0.4 mm and at most 0.8 mm between the sliding surface (12, 66, 69) of the friction bearing (3, 65, 50, 51, 55) and the outer surface of shaft (1, 67, 49), and of a length of at least 3 mm to at most half of the friction bearing width along the axis of the shaft (1, 67).

4. A friction-bearing assembly as defined in Claim 1 further comprising a bearing bushing which includes the sliding surface (12, 66, 69).

5. A friction-bearing assembly as defined in Claim 4 wherein the sliding surface (12, 66, 69) of the bearing bushing is made of aluminum or alloy thereof.

6. A friction-bearing assembly as defined in Claim 1 wherein the lubricating oil is supplied axially relative to the shaft axis (2, 68) to the first bearing gap (13, 17, 62) through one of the first and second end of the friction bearing (3, 65, 50, 51, 55).

7. A friction-bearing assembly as defined in Claim 1 wherein the inside surface of the friction bearing at the second bearing gap (14, 16, 70) is inclined at an angle of less than 30° relative to the shaft axis (2, 68).

8. A friction-bearing assembly as defined in Claim 1 wherein the second bearing gap is defined between the inside surface of the friction bearing and a groove on the outer surface of the shaft.

9. A friction-bearing assembly as defined in Claim 1, wherein the shaft (1, 67, 49) is a crankshaft having two end portions and the friction bearing (3, 65, 50, 51, 55) is a crankshaft bearing in a power unit case of an internal combustion engine, the friction bearing (3, 65, 50, 51, 55) positioned at a first end portion of the crankshaft, and the second bearing gap (14, 16, 70) of the friction-bearing assembly located on the one end of the friction-bearing assembly that is proximate to the first end portion (6, 54) of the crankshaft.

10. A friction-bearing assembly as defined in Claim 9, wherein the first end portion (6, 54) of the crankshaft (49) incorporates an axial bore (5, 56), the lubricating oil being routed into the crankshaft through the first end portion (6, 54) of the crankshaft (49).

11. A friction-bearing assembly as defined in Claim 10, further comprising a lubricating oil supply chamber (7, 59) on the first end (6, 54) of the crankshaft (49) from which lubricating oil is routed under pressure into the axial bore (5, 56) of the crankshaft (49) and into the crankshaft (49).

12. A friction-bearing assembly as defined in Claim 11, further comprising an oil supply chamber cover (8, 60) secured to the power unit case and sealing the oil supply chamber (7, 59) against the environment.

13. A friction-bearing assembly as defined in Claim 12, wherein the oil supply chamber cover (8, 60) includes a sealed feed line (10) through which lubricating oil is routed to the oil supply chamber (7, 59).

14. A friction-bearing assembly as defined in Claim 9, wherein the friction bearing (3, 65, 50, 51, 55) includes a bevel portion (15, 64) located at the one end of the friction-bearing assembly that is proximate to the first end portion (6, 54) of the crankshaft (49).

15. A friction-bearing assembly as defined in Claim 9, wherein the friction bearing (3, 65, 50, 51, 55) is in the form of a crankshaft supporting bearing (55) and at least two crankshaft main bearings (50, 51) are provided to support the crankshaft (49).

16. An internal combustion engine (100) comprising a friction-bearing assembly as defined in Claim 9, the internal combustion engine (100) having at least two cylinders and the power unit case (101) having a crankcase (102) and an integral transmission housing accommodating at least a transmission shaft.

## Patentansprüche

1. Gleitlagerbausatz, umfassend ein Gleitlager (3, 65, 50, 51, 55) und eine Welle (1, 67,49),
wobei das Gleitlager (3, 65, 50, 51, 55) eine Breite, ein erstes Ende, ein zweites Ende und eine inner Oberfläche mit einer Gleitfläche (12, 66, 69) aufweist,
wobei die Welle (1, 67, 49) eine äußere Oberfläche aufweist, die derart durch die Gleitfläche (12, 66, 69) des Gleitlagers (3, 65, 51, 55) gestützt ist, dass diese um eine Achse (2, 68) der Welle rotiert;
wobei der Gleitlagerbausatz einen ersten Lagerspalt (13, 17, 62) enthält, der zwischen der Gleitfläche des Gleitlagers und der äußeren Oberfläche der Welle begrenzt ist sowie einen zweiten Lagerspalt (14, 16, 70), der zwischen der inneren Oberfläche des Gleitlagers und der äußeren Oberfläche der Welle begrenzt ist, wobei der zweite Lagerspalt (14, 16, 70) zumindest 10 % breiter relativ zum ersten Lagerspalt (13, 17, 62), bis zu einem Maximum von 1 mm ist;
wobei der zweite Lagerspalt (14, 16, 70) an einem der ersten und zweiten Enden benachbart zum ersten Lagerspalt (13, 17, 62) positioniert ist und sich zwischen einer Schmierölzufuhr und dem ersten Lagerspalt (13, 17, 62) derart befindet, dass der erste Lagerspalt (13, 17, 62) über den zweiten Lagerspalt (14, 16, 70) mit Schmieröl versorgt wird.

2. Gleitlagerbausatz nach Anspruch 1, wobei der zweite Lagerspalt (14, 16, 70) einen Spalt von wenigstens 0,2 mm und höchstens 1 mm zwischen der Gleitfläche (12, 66, 69) des Gleitlagers (3, 65, 50, 51, 55) und der äußeren Oberfläche der Welle (1, 67, 49) bildet.

3. Gleitlagerbausatz nach Anspruch 2, wobei der zweite Lagerspalt (14, 16, 70) einen Spalt von wenigstens 0,4 mm und höchstens 0,8 mm zwischen der Gleitfläche (12, 66, 69) des Gleitlagers (3, 65, 50, 51, 55) und der äußeren Oberfläche der Welle (1, 67, 49) und eine Länge von wenigstens 3 mm bis höchstens der Hälfte der Breite des Gleitlagers entlang der Achse (1, 67) der Welle bildet.

4. Gleitlagerbausatz nach Anspruch 1, ferner umfassend eine Lagerbuchse, welche die Gleitfläche (12, 66, 69) enthält.

5. Gleitlagerbausatz nach Anspruch 4, wobei die Gleitfläche (12, 66, 69) der Lagerbuchse aus Aluminium oder einer Legierung davon hergestellt ist.

6. Gleitlagerbausatz nach Anspruch 1, wobei das Schmieröl dem ersten Lagerspalt (13, 17, 62) durch eines der ersten und zweiten Enden des Gleitlagers (3, 65, 50, 51, 55) axial relativ zur Achse (2, 68) der Welle zugeführt wird.

7. Gleitlagerbausatz nach Anspruch 1, wobei die innere Oberfläche des Gleitlagers am zweiten Lagerspalt (14, 16, 70) um einen Winkel von weniger als 30° relativ zur Achse (2, 68) der Welle geneigt ist.

8. Gleitlagerbausatz nach Anspruch 1, wobei der zweite Lagerspalt zwischen der inneren Oberfläche des Gleitlagers und einer Rinne der äußeren Oberfläche der Welle begrenzt ist.

9. Gleitlagerbausatz nach Anspruch 1, wobei die Welle (1, 67, 49) eine Kurbelwelle mit zwei Endteilen ist und das Gleitlager (3, 65, 50, 51, 55) eine Kurbelwelle in einem Antriebsgehäuse einer Brennkraftmaschine ist, wobei das Gleitlager (3, 65, 50, 51, 55) an einem ersten Endteil der Kurbelwelle positioniert ist und sich der zweite Lagerspalt (14, 16, 70) des Gleitlagerbausatzes am einen Ende des Gleitlagerbausatzes befindet, das benachbart zum Endteil (6, 54) der Kurbelwelle liegt.

10. Gleitlagerbausatz nach Anspruch 9, wobei der erste Endteil (6, 54) der Kurbelwelle eine axiale Bohrung (5, 56) enthält, wobei das Schmieröl durch den ersten Endteil (6, 54) der Kurbelwelle (49) geführt ist.

11. Gleitlagerbausatz nach Anspruch 10, ferner umfassend eine Schmierölzufuhrkammer (7, 59) am ersten Ende (6, 54) der Kurbelwelle (49), von welcher aus das mit Druck beaufschlagte Schmieröl in die axiale Bohrung (5, 56) auf die Kurbelwelle (49) und in die Kurbelwelle (49) geführt ist.

12. Gleitlagerbausatz nach Anspruch 11, ferner umfassend eine Ölzufuhrkammerabdeckung (8, 60), die am Antriebsgehäuse befestigt ist und die Ölzufuhrkammer (7, 59) von der Umgebung abschließt.

13. Gleitlagerbausatz nach Anspruch 12, wobei die Ölzufuhrkammerabdeckung (8, 60) eine abgeschlossene Zufuhrleitung (10) enthält, durch welche Schmieröl an die Ölzufuhrkammer (7, 59) geführt ist.

14. Gleitlagerbausatz nach Anspruch 9, wobei das Gleitlager (3, 65, 50, 51, 55) einen Abflachungsbereich (15, 64) enthält, der sich an dem Ende des Gleitlagerbausatzes befindet, das sich benachbart zum ersten Endbereich (6, 54) der Kurbelwelle (49) befindet.

15. Gleitlagerbausatz nach Anspruch 9, wobei das Gleitlager (3, 65, 50, 51, 55) in Form eines die Kurbelwelle stützenden Lagers (55) vorliegt und zumindest zwei Kurbelwellenhauptlager (50, 51) zur Lagerung der Kurbelwelle (49) bereitgestellt sind.

16. Brennkraftmaschine (100), umfassend einen Gleitlagerbausatz nach Anspruch 9, wobei die Brennkraftmaschine (100) zumindest zwei Zylinder und das Antriebsgehäuse (101) eine Kurbelwelle (102) sowie ein integriertes Getriebegehäuse aufweist, in dem zumindest eine Getriebewelle untergebracht ist.

## Revendications

1. Un assemblage de roulement à friction comprenant un roulement à friction (3, 65, 50, 51, 55) et un arbre (1, 67, 49),
le roulement à friction (3, 65, 50, 51, 55) ayant une largeur, une première extrémité, une deuxième extrémité et une surface interne incluant une surface glissante (12, 66, 69),
l'arbre (1, 67, 49) ayant une surface externe soutenue par la surface glissante (12, 66, 69) de la surface du roulement à friction (3, 65, 51, 55) de sorte à tourner autour de l'axe de l'arbre (2, 68) ;
l'assemblage de roulement à friction comprenant un premier interstice de palier (13, 17, 62) défini entre la surface glissante du roulement à friction et la surface extérieure de l'arbre et un deuxième interstice de palier (14, 16, 70) défini entre la surface intérieure du roulement à friction et la surface extérieure de l'arbre, le deuxième interstice de palier (14, 16, 70) étant au moins 10 % plus large que le premier interstice de palier (13, 17, 62), jusqu'à un maximum de 1 mm;
le deuxième interstice de palier (14, 16, 70) positionné à l'une de la première et de la deuxième extrémité, adjacent au premier interstice de palier (13, 17, 62) et situé entre une source d'alimentation d'huile de lubrification et le premier interstice de palier (13, 17, 62) de sorte que le premier interstice de palier (13, 17, 62) est alimenté en huile lubrifiante par le deuxième interstice de palier (14, 16, 70).

2. Un assemblage de roulement à friction tel que défini dans la revendication 1, là où le deuxième interstice de palier (14, 16, 70) forme un interstice d'au moins 0,2 mm et d'au plus 1 mm entre la surface glissante (12, 66, 69) du roulement à friction (3, 65, 50, 51, 55) et la surface externe de l'arbre (1, 67, 49).

3. Un assemblage de roulement à friction tel que défini dans la revendication 2, là où le deuxième interstice de palier (14, 16, 70) forme un interstice d'au moins 0,4 mm et d'au plus 0,8 mm entre la surface glissante (12, 66, 69) du roulement à friction (3, 65, 50, 51, 55) et la surface externe de l'arbre (1, 67, 49) et d'une longueur d'au moins 3 mm jusqu'à au moins la moitié de la largeur du roulement à friction le long de l'axe de l'arbre (1, 67).

4. Un assemblage de roulement à friction tel que défini dans la revendication 1, comprenant en plus un roulement à friction de palier qui comprend une surface glissante (12, 66, 69).

5. Un assemblage de roulement à friction tel que défini dans la revendication 4, là où la surface glissante (12, 66, 69) du roulement à friction de palier est faite d'aluminium ou d'un alliage du matériau.

6. Un assemblage de roulement à friction tel que défini dans la revendication 1, là où l'huile lubrifiante est alimentée au premier interstice de palier (13, 17, 62) dans la direction axiale de l'arbre (2, 68) au travers de la première ou de la deuxième extrémité du roulement à friction (3, 65, 50, 51,55).

7. Un assemblage de roulement à friction tel que défini dans la revendication 1, là où la surface intérieure du roulement à friction au deuxième interstice de palier (14, 16, 70) est inclinée à un angle de moins de 30° relativement à l'axe de l'arbre (2, 68).

8. Un assemblage de roulement à friction tel que défini dans la revendication 1, là où le deuxième interstice de palier est défini entre la surface intérieure du roulement à friction et un sillon sur la surface externe de l'arbre.

9. Un assemblage de roulement à friction tel que défini dans la revendication 1, là où l'arbre (1, 67, 49) est un vilebrequin ayant deux parties d'extrémités et le c roulement à friction (3, 65, 50, 51, 55) est un palier de vilebrequin dans un carter du groupe moteur à combustion interne; le roulement à friction (3, 65, 50, 51, 55) positionné à une première extrémité du vilebrequin et le deuxième interstice de palier (14, 16, 70) de l'assemblage de roulement à friction situé à l'une des extrémités de l'assemblage de roulement à friction qui est près de la première partie d'extrémité (6, 54) du vilebrequin.

10. Un assemblage de roulement à friction tel que défini dans la revendication 9, là où la partie de la première extrémité (6, 54) du vilebrequin (49) inclut un alésage axial (5, 56), l'huile de lubrification étant dirigée dans le vilebrequin à travers la partie de la première extrémité (6, 54) du vilebrequin (49).

11. Un assemblage de roulement à friction tel que défini dans la revendication 10, comprenant en plus une chambre d'alimentation d'huile de lubrification (7, 59), sur la première extrémité (6, 54) du vilebrequin (49) à partir de laquelle l'huile est acheminée sous pression dans l'alésage axial (5, 56) du vilebrequin (49) et dans le vilebrequin (49).

12. Un assemblage de roulement à friction tel que défini dans la revendication 11, comprenant en plus un couvercle de chambre d'alimentation d'huile de lubrification (8, 60), fixé au carter du groupe moteur et scellant la chambre d'alimentation d'huile de lubrification (7, 59) des contaminations externes.

13. Un assemblage de roulement à friction tel que défini dans la revendication 12, là où le couvercle (8, 60) de la chambre d'alimentation d'huile inclut une conduite d'alimentation (10) à scellement par laquelle l'huile de lubrification est acheminée à la chambre d'alimentation d'huile (7, 59).

14. Un assemblage de roulement à friction tel que défmi dans la " revendication 9, là où le roulement à friction (3, 65, 50, 51, 55) comprend une portion biseautée (15, 64) située à une extrémité de l'assemblage de roulement à friction qui est près de la partie de la première extrémité (6, 54) du vilebrequin (49).

15. Un assemblage de roulement à friction tel que défini dans la revendication 9, là où le roulement à friction (3, 65, 50, 51, 55) prend la forme d'un palier de soutien de vilebrequin (55) et au moins deux paliers de vilebrequin principaux (50, 51) sont fournis pour soutenir le vilebrequin (49).

16. Un moteur à combustion interne (100) comprenant un assemblage de roulement à friction tel que défini dans la revendication 9, le moteur à combustion interne (100) ayant au moins deux cylindres et le carter du groupe moteur (101) ayant un carter (102) avec bâti intégré pour boîte de vitesse accommodant au moins un arbre d'entraînement.
